# EUROPEAN PATENT APPLICATION

(11) **EP 4 685 491 A1**
(43) Date of publication of application: **28.01.2026**
(21) Application number: 24774654.8
(22) Date of filing: 04.03.2024
(51) Int. Cl.: G01N 35/00, G01N 21/59

(54) **AUTOMATED ANALYSIS DEVICE AND SAMPLE ANALYSIS METHOD**

(30) Priority: 22.03.2023 JP 2023045192
(71) Applicant: HITACHI HIGH-TECH CORPORATION, Tokyo 105-6409 (JP)
(72) Inventor: UMENO Naoto, Tokyo 105-6409 (JP); INABE Toshiyuki, Tokyo 105-6409 (JP); KARO Hikaru, Tokyo 105-6409 (JP); SAEGUSA Takashi, Tokyo 105-6409 (JP)
(74) Representative: MERH-IP Matias Erny Reichl Hoffmann Patentanwälte PartG mbB
(86) International application number: PCT/JP2024/008163
(87) International publication number: WO 2024/195510

(57) **Abstract**

A waveform acquisition unit 123 samples the amount of transmitted light measured by a transmitted light measuring instrument 202 while a reaction vessel 106 passes a light measurement point as a result of the rotation of a reaction disk 103, and acquires the amount of transmitted light as transmitted light amount waveform data, and a data processing unit 124 calculates a difference or derivative of the transmitted light amount waveform data of the first reaction vessel to acquire transmitted light amount difference waveform data or transmitted light amount differentiation waveform data, and determines the influence of air bubbles in a reaction liquid stored in the first reaction vessel on the basis of a change over time in the transmitted light amount difference waveform data or the transmitted light amount differentiation waveform data for each photometric sampling when the first reaction vessel passes the light measurement point. As a result, the analysis accuracy and reliability of the automated analysis are improved.

## Description

### Technical Field

The present invention relates to an automatic analyzer and a specimen analysis method using the same.

### Background Art

An automatic analyzer irradiates a reaction liquid generated by reacting a reagent corresponding to a target component with a biological sample (specimen) such as blood or urine with light, and obtains the presence or absence and a concentration of the target component based on light amount data obtained by measuring transmitted light or scattered light. Reaction vessels containing the reaction liquid are continuously arranged on a circumference of a rotatable reaction disk, and the reaction liquid contained in a large number of reaction vessels is continuously irradiated with light by rotating the reaction disk to perform measurement.

In recent years, there has been a demand for an automatic analyzer that provides an analysis result with higher accuracy and higher reliability at a high speed. For example, when an abnormality such as an air bubble or a scratch occurs in a reaction vessel, an analysis result may be an abnormal value, and thus there is a related art that detects such an abnormality.

PTL 1 discloses a technique in which a light measurement waveform of a different photometric point in the same test or a light measurement waveform of a water blank serving as a reference light measurement waveform is used as light measurement data of a comparison source, a degree of matching is calculated by light measurement data of the same cuvette and the same wavelength, and an error is determined by a calculated value or a change thereof.

PTL 2 discloses a technique that includes a standard deviation calculation unit that calculates a standard deviation of an absorbance of a plurality of reaction liquids measured by the light measurement unit while the reaction vessel passes through the light measurement unit once, each time the reaction vessel passes through the light measurement unit; a standard deviation determination unit that determines whether each of the plurality of standard deviations calculated by the standard deviation calculation unit is smaller than a threshold value determined based on the standard deviation of the plurality of absorbances in uniformly stirred reaction liquids; and a technology that determines, as the absorbance when analyzing a specimen, one of average values of the plurality of absorbances having standard deviations calculated by an average value calculation unit and determined to be smaller than the threshold value by the standard deviation determination unit.

### Citation List

### Patent Literature

PTL 1: JP2009-281941A
PTL 2: JP2010-160116A

### Summary of Invention

### Technical Problem

As described above, in absorption and scattered light analysis of the automatic analyzer, when air bubbles are mixed in the reaction liquid in the reaction vessel, there is a case in which an accurate analysis result cannot be obtained due to the influence thereof, and thus a technique such as the related art is developed. However, in the technique disclosed in PTL 1, it is necessary to acquire a reference light measurement waveform, and it is difficult to accurately determine an error when an influence due to mixing of air bubbles or a scratch on a cell occurs at the time of acquiring the reference light measurement waveform. In the technique disclosed in PTL 2, the standard deviation is calculated for each photometric point, but there is a possibility that a change in absorbance due to reagent dispensing before and after reagent dispensing remarkably appears, and an appropriate absorbance cannot be determined.

### Solution to Problem

An automatic analyzer according to an embodiment of the invention includes: a reaction disk on which a plurality of reaction vessels including a first reaction vessel are disposed in a circumferential direction and which is intermittently rotatable; a light detection system including a light source and a spectrophotometer, the light detection system being disposed such that the reaction vessels disposed on the reaction disk pass through a photometric point on a straight line connecting the light source and the spectrophotometer; and a spectrophotometer data processing unit. The reaction disk includes a temperature bath that maintains each of the reaction vessels at a predetermined temperature, the spectrophotometer includes a transmitted light measuring instrument that measures an amount of transmitted light of light from the light source passing through the reaction vessel in an irradiation direction, and the spectrophotometer data processing unit includes a waveform acquisition unit that samples the amount of the transmitted light measured by the transmitted light measuring instrument while the reaction vessel passes the photometric point as the reaction disk rotates, and acquires the amount of transmitted light as transmitted light amount waveform data, and a data processing unit that calculates a difference or a derivative of the transmitted light amount waveform data of the first reaction vessel, acquires transmitted light amount difference waveform data or transmitted light amount derivative waveform data, and determines an influence of an air bubble in a reaction liquid contained in the first reaction vessel based on a change over time in the transmitted light amount difference waveform data or the transmitted light amount derivative waveform data for each photometric sampling when the first reaction vessel passes through the photometric point.

### Advantageous Effects of Invention

Since a sampling section that is influenced by air bubbles can be accurately identified, analysis accuracy and reliability of an automatic analyzer can be improved. Other technical problems and novel features will become apparent from description of the present description and the accompanying drawings.

### Brief Description of Drawings

[FIG. 1] FIG. 1 is an overall configuration diagram of an automatic analyzer.
[FIG. 2] FIG. 2 is a configuration example of a light detection system and a spectrophotometer data processing unit.
[FIG. 3] FIG. 3 is a diagram showing a variation example of a transmitted light scanning waveform of a reaction liquid before and after reagent dispensing.
[FIG. 4] FIG. 4 is a diagram showing an example of transmitted light amount waveform data when air bubbles are present in the reaction liquid.
[FIG. 5] FIG. 5 is a diagram showing a change over time of air bubbles in a reaction vessel.
[FIG. 6] FIG. 6 is a diagram showing a change over time in the transmitted light amount waveform data when the air bubbles are present in the reaction vessel.
[FIG. 7] FIG. 7 is a flowchart in which a spectrophotometer data processing unit identifies a region where the air bubbles are present.
[FIG. 8] FIG. 8 is a diagram showing a method for calculating a difference between pieces of transmitted light amount waveform data.
[FIG. 9] FIG. 9 is a diagram showing step S104 of the flowchart.
[FIG. 10] FIG. 10 is a diagram showing a method for identifying an influence range of the air bubbles.
[FIG. 11] FIG. 11 is a diagram showing the method for identifying the influence range of the air bubbles.

### Description of Embodiments

An embodiment of the invention will be described in detail with reference to the drawings. In the following embodiment, it is needless to mention that components (also including element steps and the like) thereof are not necessarily essential unless otherwise identified or unless clearly considered to be essential in principle. In addition, air bubbles, light amount waveform data, and the like are described by omitting reference numerals when it is not necessary to uniquely identify them in the description and the drawings.

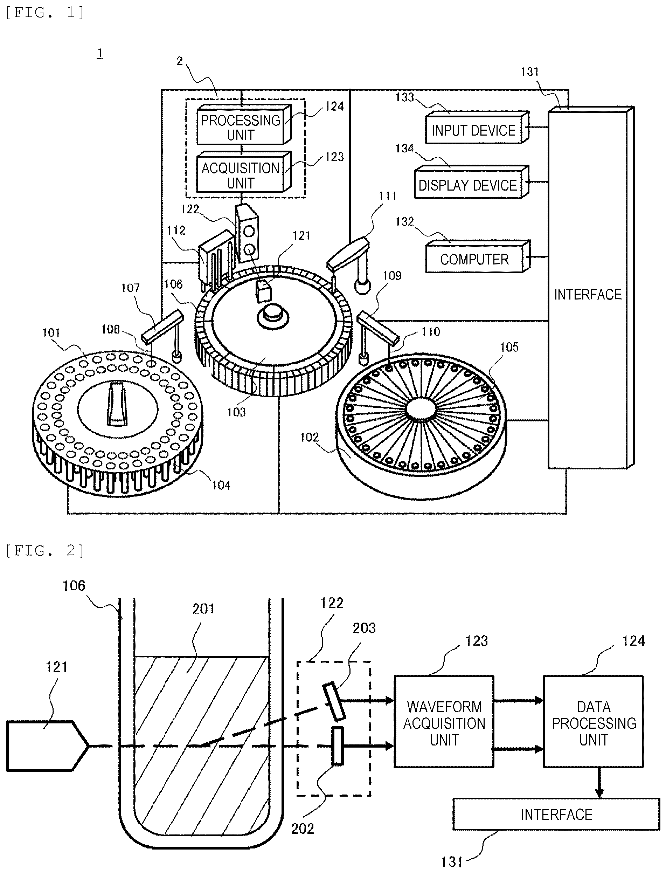

FIG. 1 is an overall configuration diagram of an automatic analyzer 1. The automatic analyzer 1 includes, as main components, a sample disk (a specimen vessel 104 holding mechanism) 101, a reagent disk (reagent bottle 105 holding mechanism) 102, a reaction disk (a reaction vessel 106 holding mechanism) 103, a specimen dispensing mechanism 107, a reagent dispensing mechanism 109, a stirring mechanism 111, a cleaning mechanism 112, a light source 121, a spectrophotometer 122, and a computer 132.

The reaction disk 103 can rotate intermittently and includes a temperature bath. In the reaction disk 103, a large number of reaction vessels (reaction cells) 106 made of a translucent material are installed in a circumferential direction. The reaction vessel 106 on the reaction disk 103 is maintained at a predetermined temperature, for example, 37.5°C by the temperature bath.

In the sample disk 101, a large number of specimen vessels 104 containing biological samples such as blood and urine can be placed on a circumference. The specimen dispensing mechanism (sample dispensing mechanism) 107 is disposed near the sample disk 101. The specimen dispensing mechanism 107 includes a specimen dispensing nozzle 108 and a drive unit. Accordingly, during specimen dispensing, the specimen dispensing mechanism 107 moves the specimen dispensing nozzle 108 to a dispensing position (aspiration position) on the sample disk 101 by rotating and moving it up and down, aspirates a predetermined amount of sample from the specimen vessel 104 containing the sample, and then moves it to an ejection position on the reaction disk 103 and ejects the sample into the reaction vessel 106.

A large number of reagent bottles 105 can be installed on the circumference of the reagent disk 102. The reagent bottle 105 contains a reagent corresponding to an item that can be analyzed by the automatic analyzer 1. The reagent dispensing mechanism 109 having substantially the same mechanism as the specimen dispensing mechanism 107 is disposed near the reagent disk 102. During reagent dispensing, the reagent dispensing mechanism 109 moves a reagent dispensing nozzle 110 to a dispensing position on the reagent disk 102 by rotating and moving it up and down, aspirates a predetermined amount of reagent from the reagent bottle 105 containing the reagent, and then moves it to an ejection position on the reaction disk 103 and ejects the reagent into the reaction vessel 106.

The stirring mechanism 111 is disposed near the reaction disk 103. A mixed solution (reaction liquid) of the specimen and the reagent contained in the reaction vessel 106 is stirred by the stirring mechanism 111, and the reaction is promoted.

The light source 121 is disposed near a center of the reaction disk 103. Here, light after the light of the light source 121 passes through the reaction vessel 106 in an irradiation direction is referred to as transmitted light, and light after the light of the light source 121 passes through the reaction vessel 106 in a direction other than the irradiation direction is referred to as scattered light. The spectrophotometer 122 includes a transmitted light measuring instrument 202 that measures an intensity of transmitted light and a scattered light measuring instrument 203 that measures an intensity of scattered light, and is disposed on an outer periphery of the reaction disk 103. The light source 121 and the spectrophotometer 122 constitute a light detection system. After the stirring, the reaction vessel 106 rotatably moves to pass through a photometric point (light photometric position) on a straight line connecting the light source 121 and the spectrophotometer 122. The reaction liquid present in each reaction vessel 106 after the stirring is performed is measured every time the reaction liquid passes through the photometric point during a rotation operation of the reaction disk 103. An analog signal indicating an amount of the measured transmitted light and scattered light is input to a spectrophotometer data processing unit 2. The spectrophotometer data processing unit 2 includes a waveform acquisition unit 123 and a data processing unit 124. The waveform acquisition unit 123 converts the analog signal into data at a predetermined sampling period, and the data processing unit 124 processes the data as a digital signal.

The cleaning mechanism 112 is disposed near the reaction disk 103. The inside of the reaction vessel 106 after the measurement is completed is cleaned by the cleaning mechanism 112, so that the reaction vessel 106 can be repeatedly used.

The computer 132 is connected to the sample disk 101, the reagent disk 102, the reaction disk 103, the specimen dispensing mechanism 107, the reagent dispensing mechanism 109, the stirring mechanism 111, the cleaning mechanism 112, and the spectrophotometer data processing unit 2 via an interface 131. The computer 132 sends commands to all the mechanisms, performs control according to the operation of each mechanism, and performs specimen analysis using light amount data from the spectrophotometer data processing unit 2. The computer 132 has a storage medium in which information such as analysis parameters, analysis request contents, and analysis results is recorded.

The interface 131 is connected to an input device 133 for inputting an operation command or the like and a display device 134 for displaying analysis items, errors, and the like.

Next, a specimen dispensing operation in the automatic analyzer 1 will be described. Items that can be analyzed by the automatic analyzer 1 are input in advance via the input device 133 and stored in the computer 132. An operator uses an operation item display function of the display device 134 to select, from a screen, an analysis item corresponding to each specimen and its request content. At this time, information such as a patient ID is also input to the computer 132 using the input device 133. In order to execute the instructed analysis item for each specimen, the specimen dispensing nozzle 108 of the specimen dispensing mechanism 107 dispenses a predetermined amount of sample from the specimen vessel 104 to the reaction vessel 106 according to an analysis parameter.

The reaction vessel 106 into which the sample is dispensed is transferred to a reagent dispensable position by the rotation of the reaction disk 103. The reagent dispensing nozzle 110 of the reagent dispensing mechanism 109 dispenses a predetermined amount of reagent from the reagent bottle 105 to the reaction vessel 106 according to the analysis parameter. Contrary to the example, the reagent may be dispensed before the sample is dispensed. Thereafter, stirring is performed by the stirring mechanism 111, and the specimen and the reagent are stirred and mixed.

When the reaction vessel 106 in which mixing is completed crosses a photometric point present on a straight line connecting the light source 121 and the spectrophotometer 122, transmitted light and scattered light of the reaction liquid are measured by the spectrophotometer 122. The measured transmitted light and scattered light are converted into numerical value data for each sampling position by the waveform acquisition unit 123 of the spectrophotometer data processing unit 2, extracted as light amount data of a measurement target by the data processing unit 124, and then input to the computer 132 via the interface 131. The processing in the data processing unit 124 may be performed by the computer 132.

Concentration data is calculated based on a calibration curve measured in advance and an analysis method identified for each converted numerical value data and test item. The concentration data of a component of each analysis item, which is an analysis result, is stored in the computer 132. The analysis result is displayed on a screen of the display device 134 after the analysis is completed.

FIG. 2 is a configuration example of the light detection system and the spectrophotometer data processing unit 2. The light emitted from the light source 121 passes through a reaction liquid 201 as a measurement target accommodated in the reaction vessel 106, and is received by the transmitted light measuring instrument 202 installed on a straight line of the light source 121. Part of the light emitted from the light source 121 becomes scattered light while passing through the reaction liquid 201. The scattered light is received by the scattered light measuring instrument 203 installed at an angle different from that of the transmitted light measuring instrument 202. A plurality of scattered light measuring instruments may be installed at different angles. Here, the waveform acquisition unit 123 synchronously samples the amount of the transmitted light and the amount of the scattered light from the reaction vessel 106 passing through the photometric point, which are respectively detected by the transmitted light measuring instrument 202 and the scattered light measuring instrument 203, and acquires the amount of light for each sampling position as scanning waveform data. The data processing unit 124 extracts data corresponding to the reaction liquid 201 from the scanning waveform data acquired by the waveform acquisition unit 123 at each light detection timing (photometric sampling). Thereafter, data processing for determining the influence of air bubbles in the reaction liquid is performed, and the result is stored in the computer 132.

In general, an automatic analyzer often has a light detection system for performing transmitted light analysis and a light detection system for performing scattered light analysis separately. Since the light detection system shown in FIG. 2 uses the spectrophotometer 122 including the transmitted light measuring instrument 202 and the scattered light measuring instrument 203 in the light detection system that performs the scattered light analysis, it is not assumed that the scanning waveform data of the transmitted light measuring instrument 202 is used for analysis of a specimen. However, depending on the test item, the scanning waveform data of the transmitted light measuring instrument 202 can be used for analysis of the specimen.

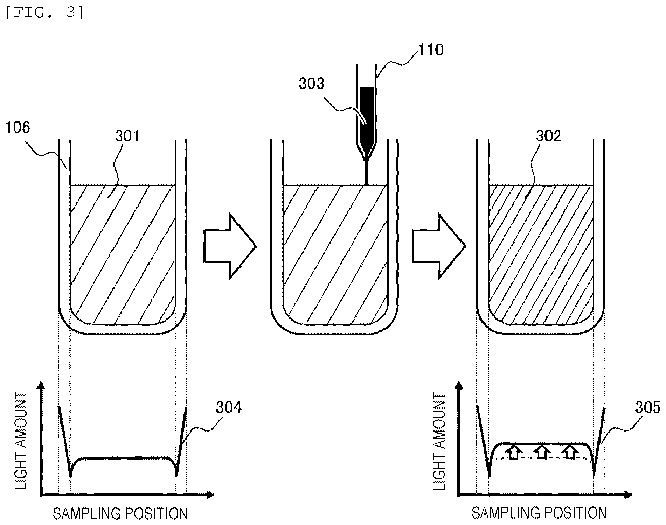

FIG. 3 shows an example of a variation of a transmitted light scanning waveform in reaction liquids 301, 302 before and after dispensing a reagent 303 stored in the reaction vessel 106. The reaction liquid 301 is a reaction liquid before dispensing the reagent 303, and the reaction liquid 302 is a reaction liquid obtained by dispensing and stirring the reagent 303 into the reaction liquid 301. Here, a scanning waveform of the transmitted light of the light from the light source 121 for the reaction liquid 301 is referred to as transmitted light amount waveform data 304, and similarly, the scanning waveform of the transmitted light for the reaction liquid 302 is referred to as transmitted light amount waveform data 305.

By mixing the reaction liquid 301 and the reagent 303, a substance in the reaction liquid 301 causes a chemical change, and the amount of light emitted from the light source 121 and scattered inside the reaction vessel 106 changes. Accordingly, in the case of FIG. 3, the transmitted light amount waveform data 305 of the reaction liquid 302 has an increased amount of light of flat portion as compared with the transmitted light amount waveform data 304 of the reaction liquid 301. Depending on the type of the reagent 303 to be dispensed and the specimen, the amount of light of the flat portion may decrease.

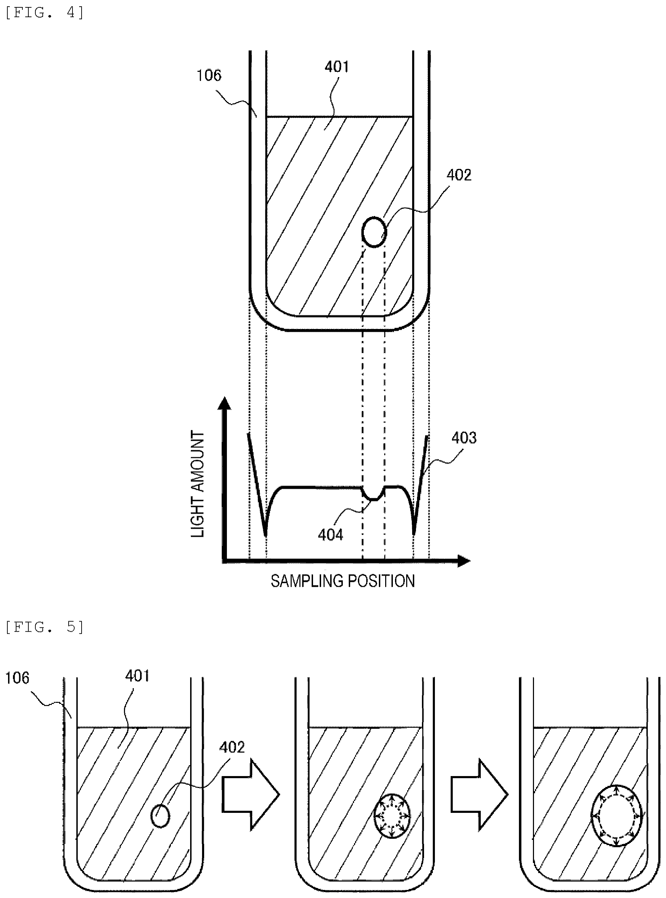

FIG. 4 shows an example of the transmitted light amount waveform data when an air bubble 402 is present in a reaction liquid 401 contained in the reaction vessel 106. The amount of light scattered in another direction of the light incident on the air bubble 402 increases due to the influence of the air bubble. As a result, as in the transmitted light amount waveform data 403 shown in FIG. 4, a region 404 in which the amount of the transmitted light decreases due to the influence of scattering in multiple directions by the air bubble 402 (that is, a sampling section in which the amount of light decreases) appears. The amount of light scattered in another direction varies depending on a size of the air bubble, and as the air bubble becomes larger, the amount of transmitted light tends to decrease and the region tends to expand.

FIG. 5 shows a change over time of the air bubble 402 in the reaction liquid 401 contained in the reaction vessel 106. The reaction liquid 401 is always maintained at a predetermined temperature (for example, 37.5°C) on the reaction disk 103. That is, in an air-conditioned environment such as an inspection room, the temperature of the reaction vessel 106 and the reaction liquid 401 is always increased. Since a gas expands by heat, if the air bubble 402 is mixed at the time of dispensing the specimen or the reagent, the air bubble 402 expands over time together with a fine gas present in the reaction liquid 401.

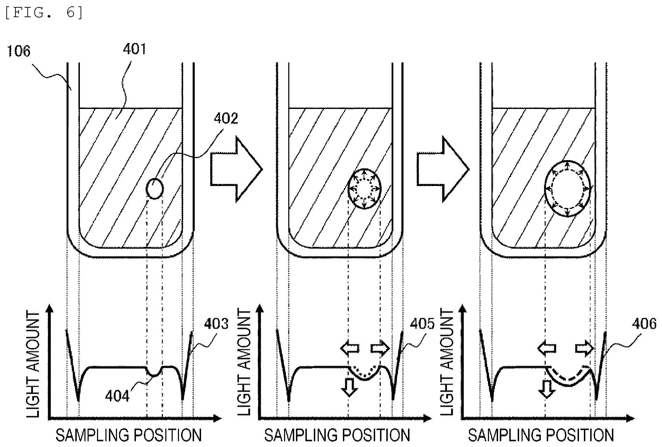

FIG. 6 shows the change over time of the transmitted light amount waveform data together with the change over time of the air bubble 402 shown in FIG. 5. As described above, when the air bubble 402 is present inside the reaction vessel 106, the light amount reduction region 404 appears in the transmitted light amount waveform data 403. As the air bubble 402 expands due to a change over time caused by heat, a degree of decrease in the amount of transmitted light appearing in the transmitted light amount waveform data 405 and 406 and a decreasing region (sampling section) increase. In the embodiment, a region (sampling section) in which an air bubble exists is identified based on a change over time in the transmitted light amount waveform data 403, 405, and 406 due to the influence of expansion of the air bubble.

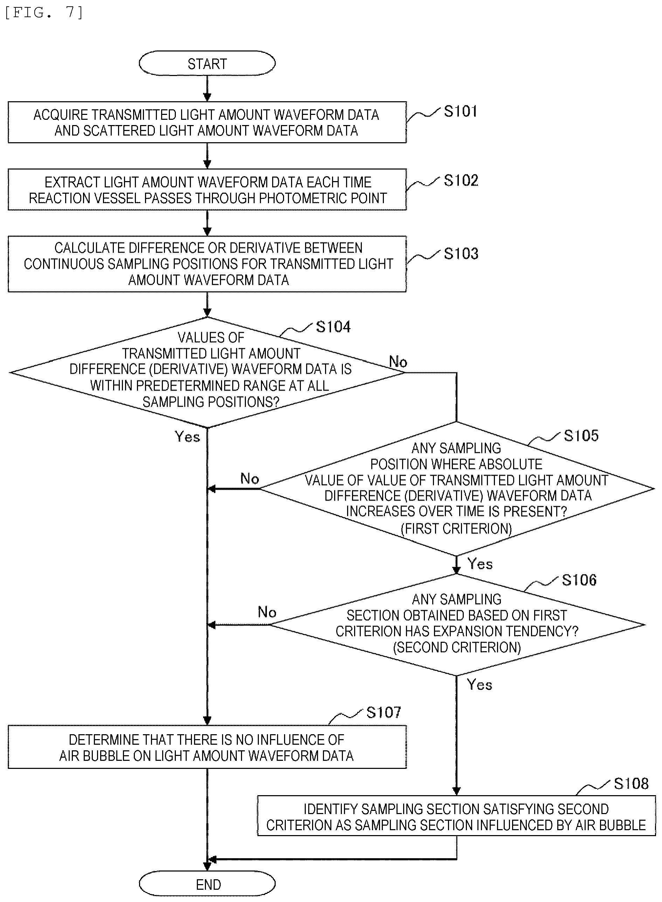

With reference to the flowchart of FIG. 7, a procedure for identifying a region where air bubbles are present in the scanning waveform data will be described.

First, the reaction vessel 106 containing the reaction liquid is irradiated with light from the light source 121, and the waveform acquisition unit 123 acquires transmitted light amount waveform data and scattered light amount waveform data from the amount of light received by the spectrophotometer 122 (S101). Here, the scattered light amount waveform data is a scanning waveform of scattered light of the light from the light source 121 with respect to the reaction liquid, and a transmitted light amount and a scattered light amount at the same sampling position are synchronously acquired in the transmitted light amount waveform data and the scattered light amount waveform data. Hereinafter, the transmitted light amount waveform data and the scattered light amount waveform data are collectively referred to as light amount waveform data.

Subsequently, the data processing unit 124 extracts the light amount waveform data for each photometric sampling, that is, each time the reaction vessel 106 passes through the photometric point (S102). The subsequent processing is also executed by the data processing unit 124.

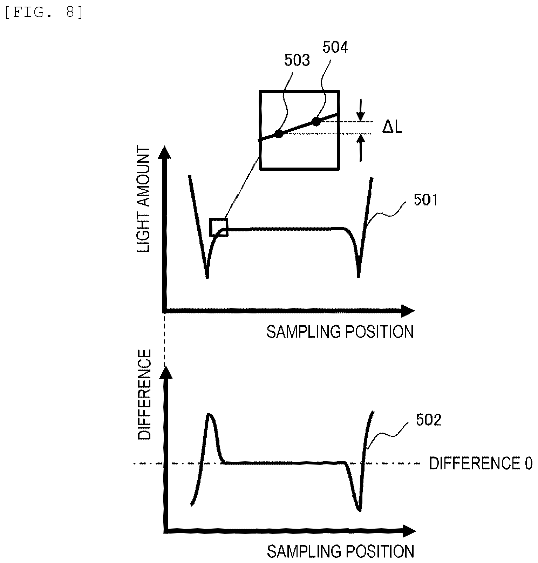

Next, a difference or derivative of the transmitted light amount waveform data is calculated (S103). FIG. 8 shows a method for calculating the difference between the transmitted light amount waveform data. Since transmitted light amount waveform data 501 is a set of data for each sampling position, transmitted light amount difference waveform data 502 can be calculated by calculating a difference ΔL of the light amount data between continuous sampling positions 503, 504 at all the sampling positions of the transmitted light amount waveform data 501. The transmitted light amount waveform data 501 may be approximated to a continuous value, and the continuous value-approximated transmitted light amount waveform data may be derived with respect to the sampling position to obtain the transmitted light amount derivative waveform data. By using the transmitted light amount difference waveform data or the transmitted light amount derivative waveform data, it is possible to ignore the change in the amount of light of the flat portion of the transmitted light amount waveform data before and after reagent dispensing as shown in FIG. 3.

Subsequently, it is determined whether values of the transmitted light amount difference (derivative) waveform data are within a predetermined range at all of sampling positions (S104). The predetermined range is set as a range in which the value of the transmitted light amount difference (derivative) waveform data can be regarded as 0. When the value of the transmitted light amount difference (derivative) waveform data is within the predetermined range (Yes in S104), it is determined that the light amount waveform data is not influenced by the air bubble (S107). On the other hand, when the value of the transmitted light amount difference (derivative) waveform data exceeds the predetermined range (No in S104), it is determined that there is an influence of the air bubble, and the processing proceeds to processing of identifying a region (sampling section) that is influenced by the air bubble.

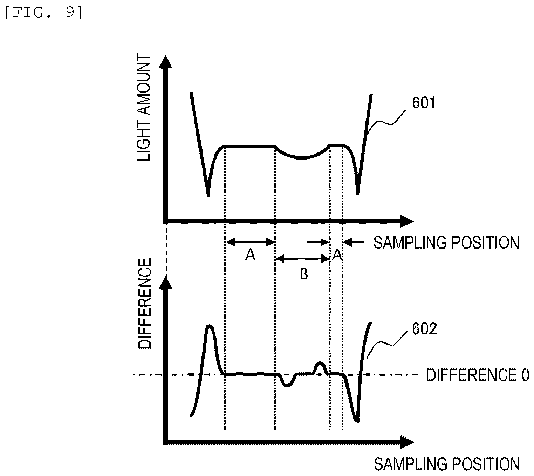

The processing in step S104 will be described with reference to FIG. 9. Transmitted light amount waveform data 601 is influenced by air bubbles in a part of the sampling section. In the transmitted light amount waveform data 601, a sampling section (flat portion) in which there is no influence of air bubbles or the like and the amount of light does not change much is referred to as a section A, and a sampling section in which the amount of light decreases due to the influence of air bubbles or the like is referred to as a section B. At this time, while a value of transmitted light amount difference waveform data 602 is substantially 0 in the section A, a positive or negative value is included in the value of the transmitted light amount difference waveform data 602 in the section B, that is, an unevenness appears in the difference scanning waveform in the section B. Therefore, when an increase or decrease exceeding a predetermined range is observed in the value of the transmitted light amount difference waveform data, it can be determined that there is a possibility of the influence of the air bubbles.

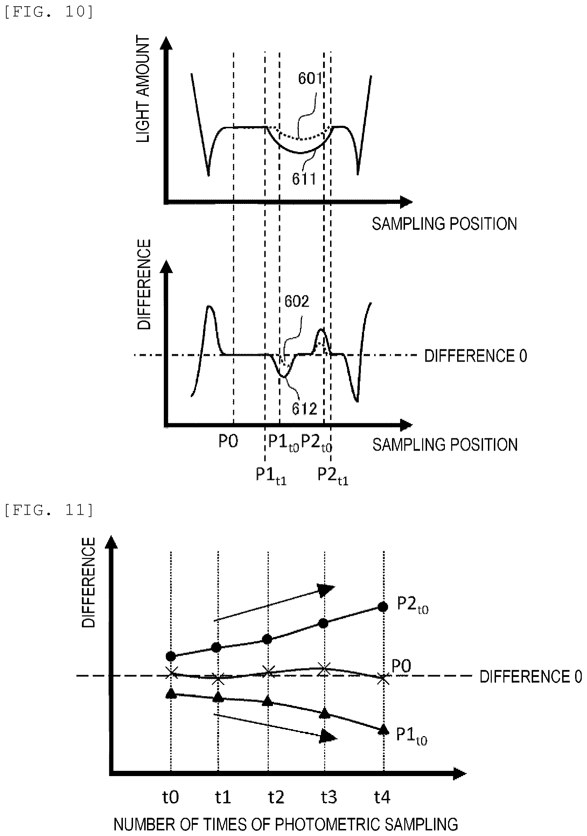

First, a method for identifying an influence range of air bubbles in a certain reaction vessel (first reaction vessel) disposed on a reaction disk will be described with reference to FIGS. 10 and 11. FIG. 10 shows transmitted light amount waveform data 611 obtained by a t1-th (t0 < t1) photometric sampling superimposed on the transmitted light amount waveform data 601, assuming that the transmitted light amount waveform data 601 shown in FIG. 9 is data obtained by a t0-th photometric sampling, and also shows transmitted light amount difference waveform data 602 and transmitted light amount difference waveform data 612 superimposed thereon.

When the air bubble starts to cross the photometric point, the amount of light decreases from the amount of light of the flat portion, and when the air bubble finishes crossing the photometric point, the amount of light increases because it returns to a value of the original amount of light of the flat portion. The unevenness appearing in the difference scanning waveform or a derivative scanning waveform represents the variation. Further, as described above, since a temperature of the reaction vessel 106 on the reaction disk 103 is always increased, the air bubbles expand. As the size of the air bubbles increases, a decrease amount in the amount of transmitted light increases, and the region where the amount of transmitted light decreases is expanded. In the embodiment, such a characteristic change over time in the influence of the air bubbles is captured as a change over time in the difference or derivative of the amount of the transmitted light appearing in the difference scanning waveform or the derivative scanning waveform, thereby identifying the sampling section that is influenced by the air bubbles in the light amount waveform data of a certain reaction vessel.

A first criterion of the method for identifying the sampling section is that an absolute value of the value of the transmitted light amount difference waveform data or the transmitted light amount derivative waveform data tends to increase over time. For example, in FIG. 10, in the transmitted light amount difference waveform data 602 obtained by the t0-th photometric sampling, a sampling position where the value changes from 0 to a negative value exceeding a predetermined range is denoted by P1ₜ₀, and a sampling position where the value changes from a positive value exceeding the predetermined range to 0 is denoted by P2ₜ₀. If the change in the difference (derivative) scanning waveform at the sampling position P1ₜ₀ is due to the influence of the air bubble, an absolute value of the value of the sampling position P1ₜ₀ in the transmitted light amount difference waveform data 612 obtained by the t1-th photometric sampling is larger than an absolute value of the value of the sampling position P1ₜ₀ in the transmitted light amount difference waveform data 602. Similarly, the absolute value of the value of the sampling position P2ₜ₀ in the transmitted light amount difference waveform data 612 obtained by the t1-th photometric sampling is larger than the absolute value of the value of the sampling position P2ₜ₀ in the transmitted light amount difference waveform data 602. This state is shown in FIG. 11. The absolute values of the values of the transmitted light amount difference waveform data at the sampling position P1ₜ₀ and the sampling position P2ₜ₀ increase as the number of times of photometry increases. Such a change over time in the absolute value of the value of the transmitted light amount difference (derivative) waveform data conforming to the first criterion is observed in the sampling sections located at both ends of a section in which the air bubble is present. As a comparative example, FIG. 11 shows values of the transmitted light amount difference waveform data at the sampling position P0 (see FIG. 10) located in the flat portion of the transmitted light amount scanning waveform. In this case, the value is approximately 0 regardless of the number of times of photometry.

A second criterion of the method for identifying the sampling section is that a sampling section determined by an air bubble end portion obtained by the first criterion tends to expand over time. For example, in FIG. 10, in the transmitted light amount difference waveform data 602 obtained by the t0-th photometric sampling, a sampling position where the value changes from 0 to a negative value exceeding a predetermined range is denoted by P1ₜ₀, and a sampling position where the value changes from a positive value exceeding the predetermined range to 0 is denoted by P2ₜ₀. Similarly, in the transmitted light amount difference waveform data 612 obtained by the t1-th photometric sampling, a sampling position where the value changes from 0 to a negative value exceeding the predetermined range is denoted by P1ₜ₁, and a sampling position where the value changes from a positive value exceeding the predetermined range to 0 is denoted by P2ₜ₁. Then, it is assumed that the sampling positions P1ₜ₀ and P2ₜ₀ in the transmitted light amount difference waveform data 602 and the sampling positions P1ₜ₁ and P2ₜ₁ in the transmitted light amount difference waveform data 612 both satisfy the first criterion and are recognized as sampling position candidates located at both ends of the section in which the air bubbles are present. At this time, the sampling section (P1ₜ₁, P2ₜ₁) is wider than the sampling section (P1ₜ₀, P2ₜ₀). Accordingly, the sampling section (P1ₜ₀, P2ₜ₀) in the light amount waveform data obtained by the t0-th photometric sampling and the sampling section (P1ₜ₁, P2ₜ₁) in the light amount waveform data obtained by the t1-th photometric sampling can be identified as sampling sections that are influenced by the air bubbles.

When the size of the air bubble becomes large to a certain extent, the transmitted light amount scanning waveform becomes gentle in the vicinity of the center of the section where the air bubble is present, so that the transmitted light amount difference (derivative) waveform data becomes a value close to 0. Therefore, by using the second criterion, it is possible to identify the sampling section that is influenced by the air bubbles including the section in which the transmitted light amount scanning waveform is gentle.

The identification of the influence range of the air bubble described above is executed in steps S105 to S106. That is, a sampling position where the absolute value of the value of the transmitted light amount difference (derivative) waveform data increases over time is searched (S105). The sampling positions extracted in step S105 are sampling positions that satisfy the first criterion, that is, sampling positions that can be both ends of a section in which the air bubbles are present. When there is no sampling position satisfying the first criterion (No in S105), it is determined that the light amount waveform data is not influenced by the air bubbles (S107). On the other hand, when there is a sampling position satisfying the first criterion (Yes in S105), it is determined whether the sampling section having the sampling position obtained based on the first criterion as both ends has an expansion tendency for each photometric sampling (S106). When the sampling section having the sampling position obtained based on the first criterion as both ends does not have an expansion tendency (No in S106), it is determined that the light amount waveform data is not influenced by the air bubble (S107). On the other hand, when the sampling section having the sampling positions satisfying the first criterion as both ends tends to expand (Yes in S106), the sampling section is identified as the sampling section that is influenced by the air bubbles (S108).

The presence or absence of the influence of the air bubbles in the light amount waveform data is transmitted from the data processing unit 124 to the computer 132 via the interface 131. When it is determined that the light amount waveform data is not influenced by the air bubbles, the computer 132 uses the measured light amount waveform data as it is for specimen analysis. On the other hand, when the light amount waveform data is determined to be influenced by the air bubbles, for example, the light amount data in the sampling section determined to be influenced by the air bubbles can be removed from the measured light amount waveform data and used for the specimen analysis. Alternatively, the specimen analysis may be performed by calculating a correction index value of the amount of light from the decrease in the amount of light due to the air bubbles and the increase in the sampling section of the light amount waveform data performed in steps S105 and 106, and estimating the amount of light in a state in which there is no influence of the air bubbles. Accordingly, the influence of the air bubbles on the analysis result can be reduced, and accuracy and reliability of analysis can be improved. Since the transmitted light amount and the scattered light amount at the same sampling position are acquired in synchronization with each other in the transmitted light amount waveform data and the scattered light amount waveform data, the sampling section that is influenced by the air bubbles obtained using the transmitted light amount difference (derivative) waveform data is applied to both the transmitted light amount waveform data and the scattered light amount waveform data.

In addition, when it is determined that most of the light amount waveform data is influenced by the air bubbles, it is difficult to output an accurate analysis result. Therefore, for example, when the sampling section identified in step S108 reaches a predetermined ratio or more of the entire section, the photometric sampling for the corresponding reaction vessel 106 may be completed, and an error indicating the mixing of the air bubbles may be displayed on the display device 134. Accordingly, it is possible to shorten a time until re-analysis is started.

In the above embodiment, by determining an influence section of the air bubble based on a temporal change of waveform data of a difference or a derivative of the measured transmitted light amount waveform data, it is possible to acquire light amount data from which the influence of the air bubbles is removed, shorten a time until an output of a re-analysis alert to an operator, and the like without setting a reference value, an average value, a threshold value, or the like according to each light amount data having different characteristics for each reagent.

The invention is not limited to the embodiment described above, and includes various modifications. For example, the embodiment described above has been described in detail in order to describe the invention in an easy-to-understand manner, and is not necessarily limited to including all the described configurations. It is possible to add, delete, or replace a part of the configuration of the embodiment with another configuration.

### Reference Signs List

1: automatic analyzer
2: spectrophotometer data processing unit
101: sample disk
102: reagent disk
103: reaction disk
104: specimen vessel
105: reagent bottle
106: reaction vessel
107: specimen dispensing mechanism
108: specimen dispensing nozzle
109: reagent dispensing mechanism
110: reagent dispensing nozzle
111: stirring mechanism
121: light source
122: spectrophotometer
123: waveform acquisition unit
124: data processing unit
131: interface
132: computer
133: input device
134: display device
201, 301, 302, 401: reaction liquid
202: transmitted light measuring instrument
203: scattered light measuring instrument
303: reagent
304, 305, 403, 405, 406, 501, 601, 611: transmitted light amount waveform data
402: air bubble
404: light amount reduction region
502, 602, 612: transmitted light amount difference waveform data
503, 504: sampling position

## Claims

1. An automatic analyzer comprising:
a reaction disk on which a plurality of reaction vessels including a first reaction vessel are disposed in a circumferential direction and which is intermittently rotatable;
a light detection system including a light source and a spectrophotometer, the light detection system being disposed such that the reaction vessels disposed on the reaction disk pass through a photometric point on a straight line connecting the light source and the spectrophotometer; and
a spectrophotometer data processing unit, wherein
the reaction disk includes a temperature bath that maintains each of the reaction vessels at a predetermined temperature,
the spectrophotometer includes a transmitted light measuring instrument that measures an amount of transmitted light of light from the light source passing through the reaction vessel in an irradiation direction, and
the spectrophotometer data processing unit includes a waveform acquisition unit that samples the amount of the transmitted light measured by the transmitted light measuring instrument while the reaction vessel passes the photometric point as the reaction disk rotates, and acquires the amount of transmitted light as transmitted light amount waveform data, and a data processing unit that calculates a difference or a derivative of the transmitted light amount waveform data of the first reaction vessel, acquires transmitted light amount difference waveform data or transmitted light amount derivative waveform data, and determines an influence of an air bubble in a reaction liquid contained in the first reaction vessel based on a change over time in the transmitted light amount difference waveform data or the transmitted light amount derivative waveform data for each photometric sampling when the first reaction vessel passes through the photometric point.

2. The automatic analyzer according to claim 1, wherein when values of the transmitted light amount difference waveform data or the transmitted light amount derivative waveform data of t0-th photometric sampling of the first reaction vessel are within a predetermined range at all of sampling positions, the data processing unit determines that there is no influence of the air bubble in the reaction liquid contained in the first reaction vessel, and when one of the sampling positions having a value exceeding the predetermined range is extracted, the data processing unit identifies a sampling section that is influenced by the air bubble in the reaction liquid contained in the first reaction vessel.

3. The automatic analyzer according to claim 2, wherein
when, at the extracted sampling position, an absolute value of the value of the transmitted light amount difference waveform data or the transmitted light amount derivative waveform data of t1-th photometric sampling (t0 < t1) of the first reaction vessel tends to increase with respect to an absolute value of the value of the transmitted light amount difference waveform data or the transmitted light amount derivative waveform data of the t0-th photometric sampling of the first reaction vessel, the data processing unit determines that the extracted sampling position is included in the sampling section that is influenced by the air bubble and in the reaction liquid contained in the first reaction vessel.

4. The automatic analyzer according to claim 3, wherein
when it is determined that a first sampling position extracted for the transmitted light amount difference waveform data or the transmitted light amount derivative waveform data of the t0-th photometric sampling of the first reaction vessel and a second sampling position extracted for the transmitted light amount difference waveform data or the transmitted light amount derivative waveform data of the t1-th photometric sampling of the first reaction vessel are included in the sampling section that is influenced by the air bubble, and a second sampling section having the second sampling position as both ends has an expansion tendency with respect to a first sampling section having the first sampling position as both ends, the data processing unit identifies the first sampling section and the second sampling section as the sampling section that is influenced by the air bubble in the reaction liquid contained in the first reaction vessel.

5. The automatic analyzer according to claim 1, wherein
the spectrophotometer includes a scattered light measuring instrument that measures an amount of scattered light that is generated when light from the light source passes through the reaction vessel in a direction other than the irradiation direction, and
the waveform acquisition unit synchronously samples the amount of the transmitted light measured by the transmitted light measuring instrument and the amount of the scattered light measured by the scattered light measuring instrument, and acquires the amount of light at each of sampling positions as the transmitted light amount waveform data and scattered light amount waveform data.

6. The automatic analyzer according to claim 5, wherein
when it is determined that there is an influence of the air bubble in the reaction liquid contained in the first reaction vessel, the data processing unit identifies a sampling section that is influenced by the air bubble in the transmitted light amount waveform data and the scattered light amount waveform data.

7. The automatic analyzer according to claim 6, comprising:
a computer, wherein
the computer stops processing on the first reaction vessel when the sampling section that is influenced by the air bubble and identified by the data processing unit reaches a predetermined ratio or more of the entire section.

8. The automatic analyzer according to claim 6, comprising:
a computer, wherein
the computer performs specimen analysis by removing data of the sampling section that is influenced by the air bubble and identified by the data processing unit from the transmitted light amount waveform data or the scattered light amount waveform data.

9. The automatic analyzer according to claim 6, comprising:
a computer, wherein
the computer performs specimen analysis by performing light amount correction on data of the sampling section that is influenced by the air bubble identified by the data processing unit in the transmitted light amount waveform data or the scattered light amount waveform data.

10. A specimen analysis method using an automatic analyzer, the automatic analyzer including
a reaction disk on which a plurality of reaction vessels including a first reaction vessel are disposed in a circumferential direction and which is intermittently rotatable, a light detection system including a light source and a spectrophotometer, the light detection system being disposed such that the reaction vessels disposed on the reaction disk pass through a photometric point on a straight line connecting the light source and the spectrophotometer, and a spectrophotometer data processing unit,
the reaction disk including a temperature bath that maintains the reaction vessel at a predetermined temperature,
the spectrophotometer including a transmitted light measuring instrument that measures an amount of transmitted light of light from the light source passing through the reaction vessel in an irradiation direction, and
the spectrophotometer data processing unit including a waveform acquisition unit and a data processing unit,
the method comprising:
sampling, by the waveform acquisition unit, an amount of transmitted light measured by the transmitted light measuring instrument while the reaction vessel passes the photometric point as the reaction disk rotates, and acquiring the amount of transmitted light as transmitted light amount waveform data; and
calculating, by the data processing unit, a difference or a derivative of the transmitted light amount waveform data of the first reaction vessel, acquiring transmitted light amount difference waveform data or transmitted light amount derivative waveform data, and determining an influence of an air bubble in a reaction liquid contained in the first reaction vessel based on a change over time in the transmitted light amount difference waveform data or the transmitted light amount derivative waveform data for each photometric sampling when the first reaction vessel passes through the photometric point.

11. The specimen analysis method according to claim 10, wherein
the spectrophotometer includes a scattered light measuring instrument that measures an amount of scattered light that is generated when light from the light source passes through the reaction vessel in a direction other than the irradiation direction, and
the waveform acquisition unit synchronously samples the amount of the transmitted light measured by the transmitted light measuring instrument and the amount of the scattered light measured by the scattered light measuring instrument, and acquires the amount of light at each of sampling positions as the transmitted light amount waveform data and scattered light amount waveform data.

12. The specimen analysis method according to claim 11, wherein
when it is determined that there is an influence of the air bubble in the reaction liquid contained in the first reaction vessel, the data processing unit identifies a sampling section that is influenced by the air bubble in the transmitted light amount waveform data and the scattered light amount waveform data.

13. The specimen analysis method according to claim 12, wherein
the automatic analyzer includes a computer, and
the computer performs specimen analysis by removing data of the sampling section that is influenced by the air bubble and identified by the data processing unit from the transmitted light amount waveform data or the scattered light amount waveform data.

14. The specimen analysis method according to claim 12, wherein
the automatic analyzer includes a computer, and
the computer performs specimen analysis by performing light amount correction on data of the sampling section that is influenced by the air bubble identified by the data processing unit in the transmitted light amount waveform data or the scattered light amount waveform data.
